# EUROPEAN PATENT APPLICATION

(11) **EP 4 818 087 A1**
(43) Date of publication of application: **07.10.2026**
(21) Application number: 25168247.2
(22) Date of filing: 03.04.2025
(51) Int. Cl.: B65G 54/02, H02K 1/14

(54) **TRACK MODULE FOR A LINEAR MOTOR CONVEYING SYSTEM AND LINEAR MOTOR CONVEYING SYSTEM**

(71) Applicant: Robert Bosch GmbH, 70442 Stuttgart (DE)
(72) Inventor: van der Woude, Lars, 5644EA Eindhoven (NL); Tielen, Niels, 4871LM Etten-Leur (NL); Peters, Piet, 5731EN Mierlo (NL); Jacobs, Roy, 5685DV Best (NL); Aarden, Walter, 4891ZJ Rijsbergen (NL); Custers, Coen, 6011PV Ell (NL)

(57) **Abstract**

The invention relates to a track module (502) for a linear motor conveying system, wherein said track module has a curved track geometry, wherein said track module comprises a track component, wherein said track component comprises, along at least part of a curved conveying path, an inner part (512), an outer part (511) and a bottom part, wherein the inner part and the outer part are arranged opposite to each other, wherein said track module is configured to receive a carrier module between the inner part and the outer part, wherein the track module comprises stator teeth at the inner part and the outer part, wherein said track module comprises multiple inner coils (541.1a, 541.1b, 541.2a, 541.2b) arranged at the stator teeth at the inner part and multiple outer coils arranged at the stator teeth at the outer part, wherein the outer coils are opposing respective ones of the inner coils, and wherein each of the inner coils and outer coils has an axis, and wherein the outer coils and/or the stator teeth at the outer part are provided with an irregular geometry or irregular geometrical arrangement along the conveying path.

## Description

The present invention relates to a track module for a linear motor conveying system and to a linear motor conveying system. The linear motor conveying system comprises one or more track modules and one or more carriers to be guided in the one or more track modules.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high dynamics. The carriers themselves can be passive. Document US 10 479 216 B2 discloses an example for a conveying system.

### Disclosure of the invention

According to the invention, a track module and a linear motor conveying system with the features of the independent claims are proposed. Advantageous embodiments are subject-matter of dependent claims and of the following description.

The invention relates to linear motor conveying systems and the track modules used therein. Also, carrier modules used therein will be explained. Such a linear motor conveying system comprises one or more track modules and one or more carriers to be guided in the one or more track modules. The track modules can be standardized modules, several of such modules can be connected to each other to form a track system. A track module has or defines at least one conveying path, i.e., a path along which the carrier modules are to be guided and moved. Such track modules can be of different types, e.g., straight modules, curve modules, and switch modules. Such different modules in required numbers can be connected to form a track system according to specific needs. While a straight modules and curve modules typically have one conveying path, a switch module can have one conveying path split into two conveying paths.

A track module comprises a track component, wherein said track component comprises, along at least part of a conveying path, a first side part, a second side part and a bottom part, wherein the first side part and the second side part are arranged opposite to each other. In cross section, when observing the track component as a cross-section in the conveying direction, this can form a U-shape or similar. The track module is configured to receive a carrier module between the first side part and the second side part. The bottom part preferably is configured to be mounted on a base plate, where the base plate can be mounted on a ground surface or in a different orientation, e.g., vertically or upside-down. Thus, the bottom part can be oriented essentially horizontally, and the first and second side parts can be oriented essentially vertically. The track component can be U-shaped, seen in cross section through the conveying path or a direction of the conveying path, for example (with the first and second side parts being the legs of the U).

The track module can further comprise at least two bearing surfaces. At least a first one of the at least two bearing surfaces is then arranged at or formed integrally with the first side part, and at least a second one of the at least two bearing surfaces is arranged at or formed integrally with the second side part, such that the at least one first bearing surface and the at least one second bearing surface face each other. The track module can also comprise more than two bearing surfaces, for example, two or three first and two or three second bearing surfaces. The number of bearing surfaces typically should match with the number and/or arrangement of wheels of a carrier module.

Such track module with two side parts allows receiving the carrier module between the first side part and the second side part. Such carrier module can comprise at least two wheels. In an embodiment, the track module is configured such that the at least one first bearing surface matches with at least a first wheel of the carrier module, and that the at least one second bearing surface matches with at least a second wheel of the carrier module. If more bearing surfaces are provided at the track module, more corresponding wheels can be provided at the carrier module. With respect to the bearing surface and the wheels, matching means that a wheel can be guided by and roll on a respective bearing surface.

The track module allows receiving a state of levitation of the carrier module between the two side parts of the track module. Having guidance only from one side, for example, would result in limited speed in curves, due to the centrifugal force which acts upon the carrier while moving through a curve.

An embodiment of the invention relates to such a track module having a curved track geometry. Such track module can be a curve module or a switch module, which is at least in part curved. While for a straight module or a straight part, the first side part and the second side part are basically similar apart from being mirrored, for a track module having a curved track geometry, the first side part and second side part differ between an inner and outer side; note that the terms "inner" and "outer" are related to a typical curved path where the inner side has a smaller radius than the outer side. Thus, the first side part and second side part will be referred to as inner part and outer part, when it is referred to a track module having a curved track geometry.

Further note that it does not matter which of inner and outer part corresponds to first or second side part. While a specific side part of a straight module can become (when several modules are connected) an inner part in a next curve module, it can then become an outer part in further curve module.

The track module comprises stator teeth at the inner part and the outer part, and multiple inner coils arranged at the stator teeth at the inner part and multiple outer coils arranged at the stator teeth at the outer part. The outer coils are opposing respective ones of the inner coils. Each of the inner coils and outer coils has an axis or an orientation along an axis. Basically, the coil is wound around a tooth, which is then aligned with such axis. Note that the coils are typically elongated in height, i.e. also the teeth are elongated in height (where the height is defined with respect to ground on which the track system is arranged).

Further, the outer coils and/or the stator teeth - or the magnets - at the outer part are provided with an irregular geometry or irregular geometrical arrangement along the conveying path. In this way, cogging torques can be reduced which occur during operation of the linear motor conveying system having such track modules.

In an embodiment, at least two of the outer coils are grouped into one or multiple groups, such that each group comprises two outer coils arranged next to each other seen along the conveying path. In particular, all outer coils can be grouped into such groups.

The stator teeth comprise in-coil teeth and can also comprise inter-coil teeth. The in-coil teeth are those teeth on which the coils are mounted, and the inter-coil teeth are arranged between two neighbouring coils. The coils and the stator teeth can in combination be referred to as a magnet or a part of a magnet. For example, a coil with the in-coil tooth on which it is arranged, can be a magnet (i.e. electromagnet or electro-magnetic motor component) or a segment of a magnet. Also, the inter-coil teeth or parts of them can be considered as part of such magnets.

For the inter-coil teeth, there are two different types, inter-coil teeth within a group, i.e. arranged between the two coils of a group, and inter-coil teeth arranged at an outer side of a group; note that a group comprises two adjacent outer coils. Where two groups are arranged next to each other, there is typically one inter-coil tooth between these two groups, which toot is, at the same time, arranged at the outside of both groups.

In an embodiment, at the outer part, the inter-coil teeth arranged at an outer side of a group have, in a radial direction, a shorter length than the in-coil teeth. In an embodiment, at the outer part, the inter-coil teeth arranged at an outer side of a group have, in a direction along the conveying path, a higher width than the in-coil teeth; this in particular applies at a surface of the teeth which is facing the inner part of the track module. In this way, cogging performance in the curved track module can be minimized, any magnetic forces can be provided as evenly as possible. Further, this allows optimizing magnet forces due to coil misalignments.

In an embodiment, the outer coils are arranged such that, for each group, the axes of the outer coils of the respective group are parallel to each other. In an embodiment, for each group, the in-coil teeth assigned to the respective group (i.e. the in-coil teeth on which the outer coils of the group are mounted) and the inter-coil tooth arranged between the outer coils of the respective group are radially aligned with the inter-coil tooth arranged between the two inner coils opposing the respective group of outer coils. This also means that not each individual outer coil is radially aligned with a respective opposing inner coil, which it is opposing. In this way, the outer coils can more easily be manufactured and mounted.

In an embodiment, the coils and/or the teeth (which can form magnets) at the outer part have an outer envelope surface, and the coils and/or the teeth (which can form magnets) at the inner part have an inner envelope surface. An envelope surface, in particular, is a curved surface. Thus, the outer envelope surface can correspond to a surface having a maximum radius, while being a smoothly curved surface. Similarly, the inner envelope surface can correspond to a surface having a minimum radius, while being a smoothly curved surface.

In an embodiment, the track module is configured such that an outer air gap between the outer envelope surface and a carrier module received in the track module is broader that an inner air gap between the inner envelope surface and the carrier module, seen in radial direction and at a center of the carrier module, seen along the conveying path. In an embodiment, the track module is configured such that an outer air gap between the outer envelope surface and a carrier module received in the track module is larger than an inner air gap between the inner envelope surface and the carrier module, seen in radial direction and at a center of the carrier module, seen along the conveying path.

In this way, any interference between the track module or the coils and stator teeth thereof with the carrier module can be avoided. While for straight modules, the air gaps at both sides can be and typically are symmetrical, in a curved module, there can occur interferences if the air gaps are arranged just like for straight modules; it is noted that the carrier module usually is of a straight geometry. Thus, using an asymmetric air gap between inner and outer side, seen with respect to a neutral line, along which a center of the carrier module moves, when moved along the conveying path allows avoiding such interferences or collisions, while keeping the curved module small.

In an embodiment, the track module is configured such that the inner (first side) electro-magnetic motor component (i.e. coils and stator teeth) match with a first counterpart electro-magnetic motor component, preferably comprising one or more permanent magnets, of the carrier module, and that the outer (second side) electro-magnetic motor component (i.e. coils and stator teeth) match with a second counterpart electro-magnetic motor component, preferably comprising one or more permanent magnets, of the carrier module.

Having guidance only from one side, for example, would require one-sided motor components. Due to the attraction force between the magnets and coils, if the carrier module was only powered on one side, this would result in quite some pressure on the wheels. This means that the wheels (for example, made of plastic) would wear down relatively fast.

Another shortcoming of having guidance on one side only, is that the carrier module was only held to the system by the attraction force of the magnets to the coils. This not only leads to problems due to centrifugal forces in the curve, but also to a limited load which can be transported. Furthermore, the centre of mass of the load needs to be above the carrier module as much as possible.

In an embodiment, the inner or first electro-magnetic motor components (i.e. inner coils and stator teeth) are fixed to the inner or first side part by means of gluing and/or screwing, and/or the outer or second electro-magnetic motor component (i.e. outer coils and stator teeth) is fixed to the outer second side part by means of gluing and/or screwing. This allows simple, fast and safe fixation.

In an embodiment, the track component (i.e., the first and second side part and the bottom part) is formed in one piece. This allows easy processing and manufacturing. In this embodiment, the track component is made of aluminum. This allows easy processing and manufacturing; in addition, aluminium allows a light weight. In an embodiment, the bottom part comprises one or more holes facing the ground surface. This allows for cleaning out small piece of debris. Also, water is allowed to drain when used in an IP65 type of environment, for example.

A carrier module can comprise a carrier component and at least two wheels. The wheels can be (rotatably) mounted on respective legs of the carrier component, for example. The carrier module is configured to be received between an inner or first side part and an outer or second side part of a track module, like the track module described above. At least a first one of the two wheels and at least a second one of the two wheels are arranged at the carrier component opposite to each other, such that the at least one first wheel faces the first side component and the at least one second wheel faces the second side component, when received in the track module.

The carrier module can further comprise two counterpart electro-magnetic motor components. A first one of the two counterpart electro-magnetic motor components and a second one of the two counterpart electro-magnetic motor components are arranged at the carrier module (or the carrier component) opposite to each other, such that the first counterpart electro-magnetic motor component faces a first electro-magnetic motor component of the track module and the second counterpart electro-magnetic motor component faces a second electro-magnetic motor component of the track module, when received in the track module.

Another embodiment of the invention relates to a linear motor conveying system, comprising one or more track modules as described above, and one or more carrier modules as described above, to be received and guided in the one or more track modules. In order to connect several track modules to each other, appropriate connection means like screws or form-fittings (e.g. dowel pins in rods, or clamping type connectors to connect to rods) can be provided for mechanical connection. Also, electrical connection of the electro-magnetic motor components should be provided.

In an embodiment, the linear motor conveying system further comprises a controlling system for controlling the linear motor conveying system to move the one or more of each of the carriers within the one or more track modules. This can comprise controlling (and powering) the electro-magnetic motor components, e.g., the coils, of the track modules in appropriate way.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

Fig. 1 shows a linear motor conveying system in a perspective view;
Fig. 2 shows a switch type track module in a perspective view;
Fig. 3a shows a track module and a carrier module in a perspective view;
Fig. 3b shows the track module and the carrier module of Fig. 3a in a cross section;
Fig. 3c shows the carrier module of Fig. 3a in a perspective view;
Fig. 4a shows track module in an embodiment;
Fig. 4b shows the track module of Fig. 4a with different details; and
Fig. 4c shows the track module of Fig. 4a with further different details.

### Detailed description of the drawing

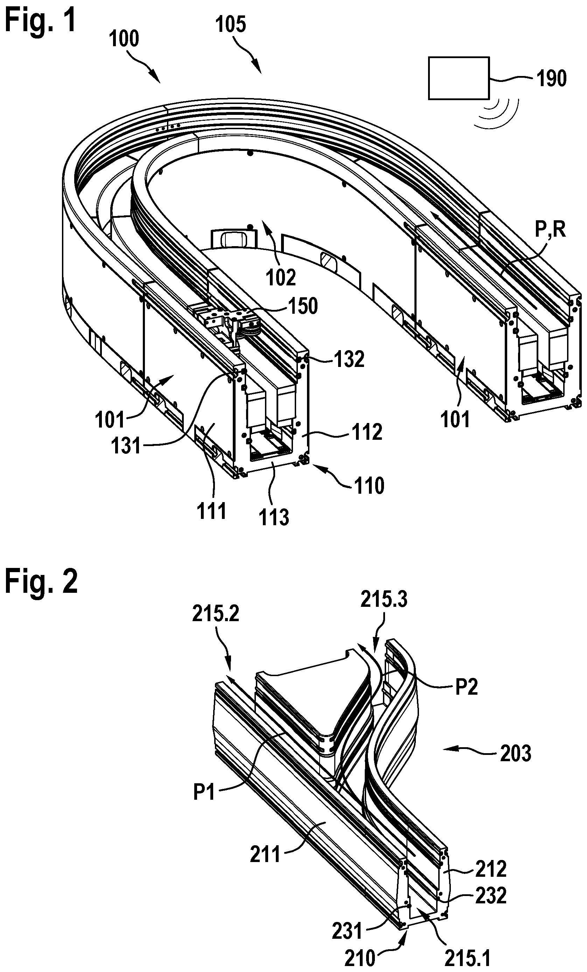

Fig. 1 schematically illustrates a linear motor conveying system 100 in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules. Curve modules and switch modules are track modules having a curved track geometry.

By means of example, two track modules 101 are straight modules, and one module is a curve module 102. The straight modules 101 are both identical, in the example shown in Fig. 1. It is noted, however, that straight modules can have a different length, where a length is to be seen in moving or conveying direction R along a conveying path P, indicated for a straight module 101 in Fig. 1. Different parts or regions of the curve module 102 can have different radii and/or curve shapes.

The straight module 101 at the lower left side in Fig. 1 will be described in more detail. The track module 101 comprises a track component 110 (a body part), and e.g. at least two bearing surfaces 131, 132. By means of example, six bearing surfaces are shown in Fig. 1, while only two of them are indicated with a reference numeral.

Further, the track component 110 comprises a first side part 111, a second side part 112 and a bottom part 113, wherein the first side part 111 and the second side part 113 are arranged opposite to each other. By means of example, the bearing surfaces are formed by support structures like rods, arranged in or inserted into recesses in the first side part 111 and the second side part 112.

It is noted that this way of how a track module is formed, does not only apply to straight module 101 but also to other types of modules like the curve module. From Fig. 1 it can be seen that where the lower left straight module 101 has a first side part 111 and a second side part 112, the curve module 102 has an outer part and an inner part as well (note that inner and outer part are particularly specific to curved modules).

Each of the straight modules and the curve module shown in Fig. 1, have a conveying path, although only shown for one straight module 101, from a respective first to a respective second end. When the track modules are connected to each other, the individual conveying paths are also connected to from a combined conveying path, along which the carrier modules are guided and conveyed. Note that carrier modules can be moved or conveyed in both directions of a conveying path, either following the direction of the arrow indicating the conveying path P or reverse. As can be seen from Fig. 1, for example, a conveying path P also provides or defines conveying or moving directions R, again the both directions mentioned.

Further, the linear motor conveying system 100 comprises, by means of example, several carrier modules 150. The track module 101 is configured to receive such a carrier module 150 between the first side part 111 and the second side part 112 - or the inner part and outer part, respectively. This is shown in Fig. 1 but will be illustrated and described in more detail later.

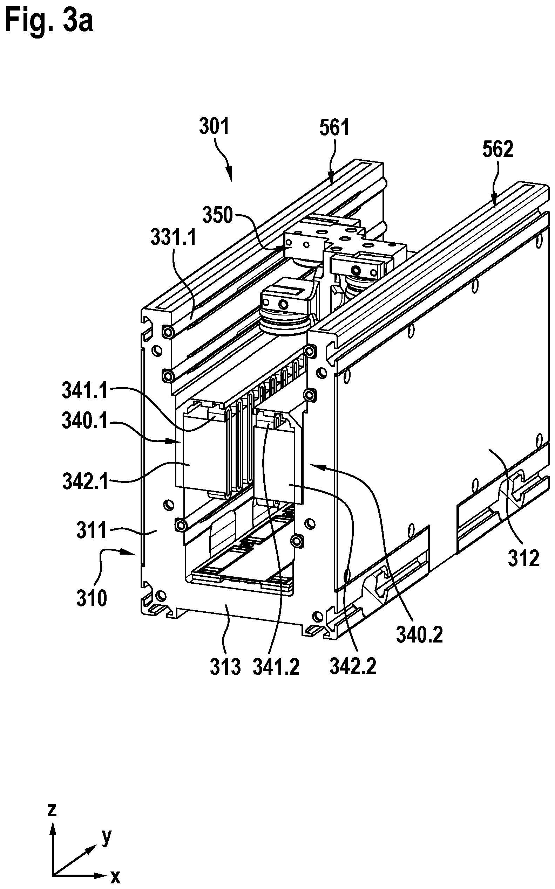

Furthermore, the linear motor conveying system 100 can comprise, in an embodiment, a controlling system 190 for controlling the linear motor conveying system 100 to move the carrier modules 150 within the track modules, i.e., in moving or conveying direction R, indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled. Such electro-magnetic motor components are not shown in Fig. 1 but will be shown in Fig. 3a and others.

Fig. 2 schematically illustrates a track module 203 in a perspective view. Track module 203 is a switch module. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module will leave the switch module 203 at the first end 215.3. In other words, both conveying paths P1, P2 are merged.

Similar to the straight modules and curve modules shown in Fig.1, the switch module 203 comprises a track component 210 for a conveying path, e.g., P1. The switch module 203 further comprises at least two bearing surfaces 231, 232. By means of example, six bearing surfaces are shown in Fig. 2, while only two of them are indicated with a reference numeral.

Further, the track component 210 comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2.

Similar to the conveying path P1, the track component comprises, along the conveying path P2, a first side part, a second side part and a bottom part (not indicated with reference numerals here). In at least a part of the curved conveying path P2, the track component 210 comprises an inner part and an outer part; it is noted that the two side parts can also exchange inner and outer part positions, as can be seen for conveying path P2.

Switch modules like the one shown in Fig. 2, can be used together with straight modules and curve modules like the one shown in Fig. 1, in order to create a (complex) track system 105 (see Fig. 1) and linear motor conveying system.

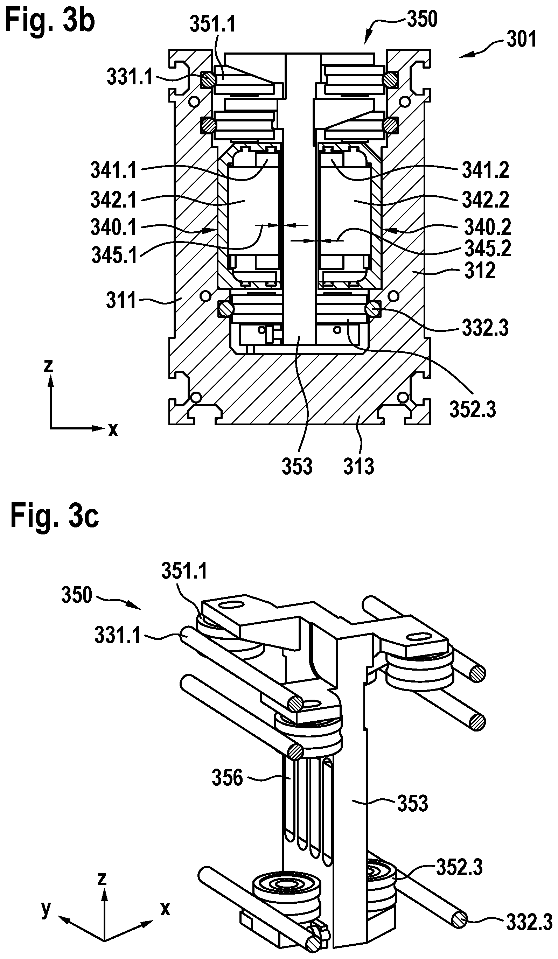

Fig. 3a illustrates a track module 301 and a carrier module 350 in a perspective view. Fig. 3b illustrates the track module 301 and the carrier module 350 of Fig. 3a in a cross section in the x-y-plane. Fig. 3c illustrates the carrier module 350 of Fig. 3a in a perspective view but without most parts of the track module. Figs. 3a, 3b and 3c shall be described together in the following. It is noted that the axes could also be defined differently, e.g., with the conveying direction in the x-direction.

By means of example and for explanation of the basic structure and composition of a track module, track module 301 is a straight module. Track module 301 can correspond to track module 101 of Fig. 1, however, showing additional components. The following explanations apply also to other types of track modules.

The track module 301 comprises a track component 310, and, by means of example, six bearing surfaces, configured as rods; only bearing surfaces or rods 331.1, 332.3 are referred to by reference numerals. Further, the track component 301 comprises, along a conveying path, a first side part 311, a second side part 312 and a bottom part 313, wherein the first side part 311 and the second side part 313 are arranged opposite to each other. The conveying path is not denoted in Fig. 3a, but extends along the y-direction and can be similar or equal to conveying path P shown in Fig. 1.

The track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

The first electro-magnetic motor component 340.1 comprises multiple (electric) coils 341.1; a number of the coils can depend on the way how the coils are manufactured. Further, the first electro-magnetic motor component 340.1 comprises stator teeth 342.1, i.e. magnetic or ferromagnetic cores or a similarly structured magnetic core, e.g., made of iron. Such magnetic or ferromagnetic core increases the magnetic forces produced by the electric coils.

Similarly, the second electro-magnetic motor component 340.2 comprises multiple (electric) coils 341.2; a number of the coils can depend on the way how the coils are manufactured. Further, the second electro-magnetic motor component 340.2 comprises stator teeth 342.2, i.e. magnetic or ferromagnetic cores or a similarly structured magnetic core, e.g., made of iron. Such magnetic or ferromagnetic core increases the magnetic forces produced by the electric coils.

While the coils and stator teeth for a straight module are arranged symmetrically, as can be seen in Fig. 3a, this can be different for modules having a curved geometry, as will be explained later in more detail. Then, coils can be inner or outer coils; this similarly applies to the first and second side parts and the stator teeth. Further, note that the magnetic motor component 340.1, 340.2 could also be multiple parts each, arranged next to each other. While for straight modules, this does not have particular relevance, it can have for modules with curved geometry, as will be explained below.

In an embodiment, the bottom part 313 is configured to be placed on and/or to be oriented towards and/or to be mounted to a ground surface. Such ground surface would be below the bottom part 313, seen in z-direction in Fig. 3a.

The track module 301 is configured to receive a carrier module 350 between the first side part 311 and the second side part 312 and is, preferably, configured such that the first bearing surfaces or rods match with respective wheels of the carrier module 350.

While Figs. 3a, 3b show the carrier module 350 being received in the track module 301, Fig. 3c shows the carrier module 350 as such. The carrier module 350 comprises a carrier component 353 and, by means of example, six wheels, where only wheels 351.1, 352.3 are referred to by reference numerals. The carrier module 350 is configured to be received between the first side part 311 and the second side part 312 of the track module 301. Each of the wheels matches with a respective one of the six bearing surfaces or rods. This can be seen in Fig. 3c.

The carrier module 350 comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Figs. 3a, 3b.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301 (in addition to the support by the wheels). In Fig. 3b, an air gap 345.1 at the first side and an air gap 345.2 on the second side are shown.

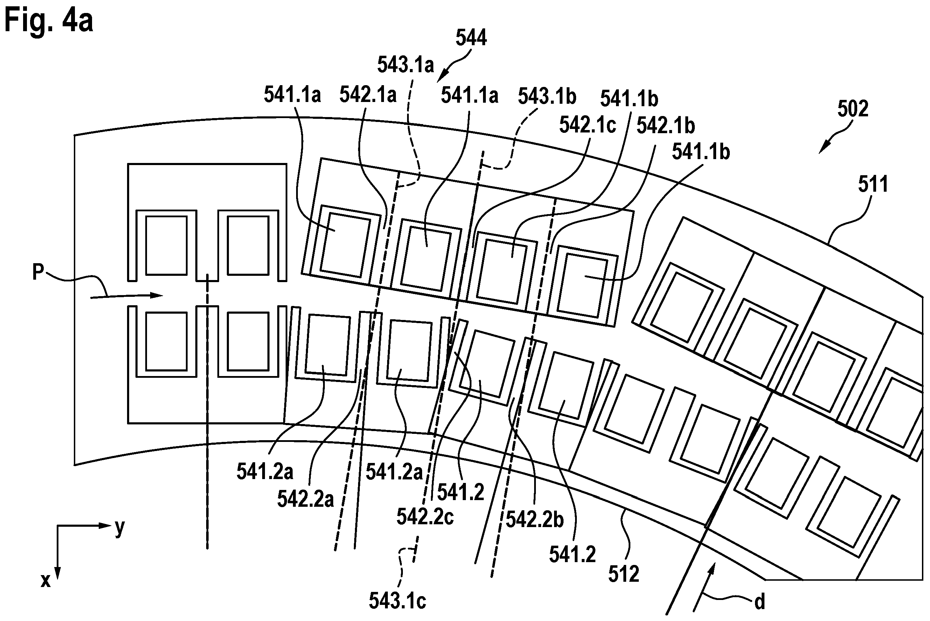

Fig. 4a schematically illustrates a track module 502 in an embodiment. Track module 502 has a curved geometry and a conveying path P. The view of track module 502 shown is a top view onto the x-y-plane. The track module 502 can basically correspond to the track module 102 of Fig. 1 or a part of it.

The track module 502 comprises a track component, which comprises, along at least part of a curved conveying path, an inner part 512, and an outer part 511. The inner part 512 and the outer part 511 are arranged opposite to each other. The track module 502 comprises stator teeth at the inner part 512 and the outer part 511. By means of example, some teeth are referred to by 542.1a, 542.1b, 542.1c at the outer part 511, and by 542.2a, 542.2b, 542.2c at the inner part 512.

Further, the track module 502 comprises multiple inner coils arranged at the stator teeth at the inner part 512, and multiple outer coils arranged at the stator teeth at the outer part 511. By means of example, two outer coils are referred to by 541.1a and 541.1b, and two inner coils are referred to by 541.2a and 541.2b. Note that for each coil, two parts are visible due to the cross-sectional view. The outer coils are opposing respective ones of the inner coils.

The stator teeth comprise in-coil teeth and inter-coil teeth, wherein the coils are mounted on the in-coil teeth, and wherein the inter-coil teeth are arranged between two neighbouring coils. Teeth 542.1a and 542.1b at the outer part, and teeth 542.2a and 542.2b at the inner part are in-coil teeth. Tooth 542.1c at the outer part and tooth 542.2c at the inner part are inter-coil teeth (each within a group, or between the outer coils of the respective group).

Further, each of the inner coils and outer coils has an axis. By means of example, outer coil 541.1a has an axis 543.1a, and outer coil 541.1b has an axis 543.1b. Since each coil is mounted on an in-coil tooth, the axis of the coil is aligned with the respective in-coil tooth or this axis. These axes are located in the x-y-plane.

At least two of the outer coils are grouped into one or multiple groups, such that each group comprises two outer coils arranged next to each other seen along the conveying path P. For example, outer coils 541.1 and 541.1b form group 544. Another group is visible on the right side of Fig. 4a. At the left side of Fig. 4a, there is a single coil visible which, for example, is not part of a group because the track module is not curved at this section.

The outer coils are arranged such that, for each group, the axes of the outer coils of the respective group are parallel to each other. This can clearly be seen for group 544 with outer coils 541.1 and 541.1. Their axes 543.1a and 543.1b are parallel to each other. Thus, the orientations of the respective in-coil teeth 542.1a, 542.1b are also parallel to each other. This results in that the orientation of inter-coil tooth 542.1c is also parallel to the in-coil teeth 542.1a, 542.1b. All three mentioned teeth are aligned with each other.

Further, for each group, the in-coil teeth assigned to the respective group and the inter-coil tooth arranged between the outer coils of the respective group are radially aligned with the inter-coil tooth arranged between the two inner coils opposing the respective group. In the example of Fig. 5a, the in-coil teeth 542.1a, 542.1b and the inter-coil tooth 542.1c are aligned with the inter-coil tooth 542.2c at the inner side 512. This can be seen by means of axis 543.c, which is not only the axis of inter-coil tooth 543.1c at the outer part 511, but also the axis of inter-coil tooth 543.2c at the inner part 512.

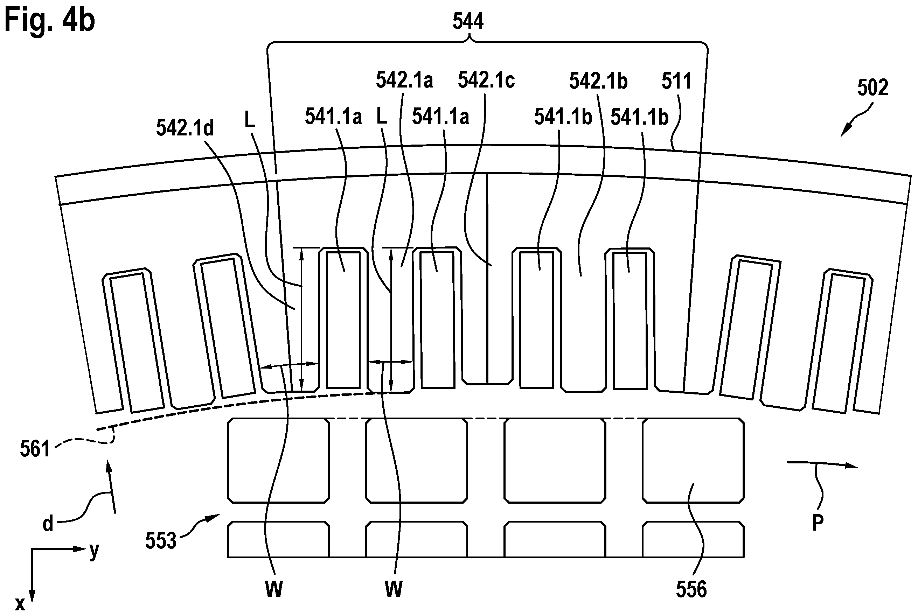

Fig. 4b illustrates the track module 502 of Fig. 5a with different details. From track module 502, only part of the outer part 511 is shown, including outer coils 541.1a, 541.1b, in-coil teeth 542.1a, 542.1b and inter-coil tooth 542.2c. In addition to Fig. 4a, another inter-coil tooth 542.1d is shown, which is between outer coil 541.1a and an outer coil of another group, with which outer coil 541.1a is not aligned. The inter-coil tooth 541.1d is arranged at an outside of a group.

Further, a part of the track component 553 of a carrier module is shown, where the carrier module can correspond to carrier modules 150 and 350. The carrier component 553 comprises counterpart electro-magnetic motor component 556 including, by means of example, eight permanent magnets.

The teeth have a length L in (at least basically) radial direction d, and a width seen along the conveying path P. At the outer part 511, the inter-coil teeth arranged at an outside of a group have, in the radial direction d, a shorter length L than the in-coil teeth. And the inter-coil teeth arranged at an outside of a group have, in the direction along the conveying path P, a higher width W than the in-coil teeth. In this way, the cogging performance in the curve can be minimized. Since the in-coil teeth do not change, the propulsion force that the motor can apply to the mover does not significantly change compared to standard size. In this way, the in-coil teeth for the outer side can be of the same kind as for the inner side.

From both, Figs. 4a an 4b and the details shown therein, it is apparent that the outer stator teeth at the outer part are provided with an irregular geometry along the conveying path P.

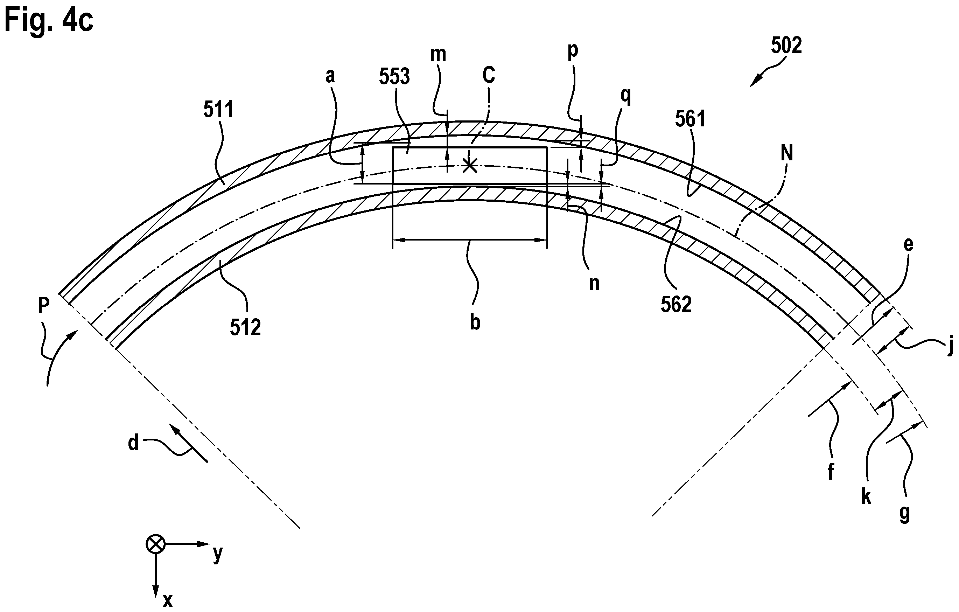

Fig. 4c illustrates the track module 502 of Fig. 4a with different details. Between the outer part 511 and the inner part 512, the carrier component 553 is visible. The coils and/or the teeth at the outer part 511 have an outer envelope surface 561, and the coils and/or the teeth at the inner part 512 have an inner envelope surface 562. Note that outer envelope surface 561 is also indicated in Fig. 5b.

In practice, the coils and/or teeth can be covered by epoxy resin or the like; in such cases, the envelope surfaces are defined via these epoxy resins or other coverings.

The envelope surfaces are curved surfaces. The outer envelope surface 561 can be a smoothly curved surface having a maximum possible radius e, and the inner envelope surface 562 can be a smoothly curved surface having a minim possible radius f. Further, a neutral line N with radius g is shown, on which a center of the carrier module or carrier component 553 moves. All radii are indicated with respect to radial direction d. The carrier component has a length b, along the conveying path P, and a width a in (basically) radial direction d.

An outer distance j between the outer envelope surface 561 and the neutral line N is greater than an inner distance k between the inner envelope surface 562 and the neutral line N, seen in radial direction. Further, an outer air gap m between the outer envelope surface 561 and the carrier module (at the height of the coils and teeth, this corresponds to carrier component 553) is broader that an inner air gap n between the inner envelope surface 562 and the carrier module, seen in radial direction and at a center C of the carrier module, seen along the conveying path P. In this way, due to the asymmetry and broader outer air gap, no interference or collision between the carrier module (or the track component thereof) and the coils and teeth, in particular at the outer side, will occur.

A minimal outer air gap p between the outer envelope surface 561 and the carrier module and a minimal inner air gap q between the inner envelope surface 562 and the carrier module, seen in radial direction d, are essentially equal.

## Claims

1. A track module (502) for a linear motor conveying system, wherein said track module has a curved track geometry,
wherein said track module comprises a track component, wherein said track component comprises, along at least part of a curved conveying path, an inner part (512), an outer part (511) and a bottom part, wherein the inner part and the outer part are arranged opposite to each other, wherein said track module is configured to receive a carrier module (150, 350) between the inner part and the outer part,
wherein the track module comprises stator teeth at the inner part and the outer part, wherein said track module comprises multiple inner coils (541.1a, 541.1b, 541.2a, 541.2b) arranged at the stator teeth at the inner part and multiple outer coils arranged at the stator teeth at the outer part, wherein the outer coils are opposing respective ones of the inner coils, and wherein each of the inner coils and outer coils has an axis, and
wherein the outer coils and/or the stator teeth at the outer part are provided with an irregular geometry or irregular geometrical arrangement along the conveying path.

2. The track module (502) of claim 1, wherein at least two of the outer coils are grouped into one or multiple groups (544), such that each group comprises two outer coils arranged next to each other seen along the conveying path (P).

3. The track module (502) of claim 2, wherein the outer coils are arranged such that, for each group (544), the axes of the outer coils of the respective group are parallel to each other.

4. The track module (502) of any one of the preceding claims, wherein the stator teeth comprise in-coil teeth (541.1a, 541.1b, 541.2a, 541.2b) and inter-coil teeth (541.1c, 451.2c), wherein the coils are mounted on the in-coil teeth, and wherein the inter-coil teeth are arranged between two neighbouring coils.

5. The track module (502) of claim 4 and of claim 2 or 3, wherein, for each group, the in-coil teeth assigned to the respective group and the inter-coil tooth arranged between the outer coils of the respective group are radially aligned with the inter-coil tooth arranged between the two inner coils opposing the respective group.

6. The track module (502) of claim 4 or 5 and of claim 2 or 3, wherein, at the outer part, the inter-coil teeth arranged at an outer side of a group, have, in a radial direction, a shorter length than the in-coil teeth.

7. The track module (502) of anyone of claims 4 to 6 and of claim 2 or 3, wherein, at the outer part, the inter-coil teeth arranged at an outer side of a group have, in a direction along the conveying path, a higher width than the in-coil teeth.

8. The track module (502) of any one of the preceding claims, wherein the coils and/or the teeth at the outer part (511) have an outer envelope surface (561), and wherein the coils and/or the teeth at the inner part (512) have an inner envelope surface (562).

9. The track module (502) of claim 8, wherein a center, seen in radial direction, of a carrier module received in the track module when moved along the conveying path describes a neutral line (N), and wherein the track module is configured such that an outer distance between the outer envelope surface and the neutral line is greater than an inner distance between the inner envelope surface and the neutral line, seen in radial direction.

10. The track module (502) of claim 8 or 9, wherein the track module is configured such that an outer air gap between the outer envelope surface and a carrier module received in the track module is broader that an inner air gap between the inner envelope surface and the carrier module, seen in radial direction and at a center of the carrier module, seen along the conveying path.

11. The track module (502) of any one of claims 8 to 10, wherein the track module is configured such that a minimal outer air gap between the outer envelope surface and a carrier module received in the track module and a minimal inner air gap between the inner envelope surface and the carrier module, seen in radial direction, are essentially equal.

12. The track module (502) of any one of the preceding claims, configured such that the inner coils match with a first counterpart electro-magnetic motor component (356, 556), preferably a permanent magnet, of the carrier module, and that the outer coils match with a second counterpart electro-magnetic motor component, preferably comprising one or more permanent magnets, of the carrier module.

13. The track module (502) of any one of the preceding claims, further comprising at least two bearing surfaces, wherein at least a first one of the at least two bearing surfaces is arranged at or formed integrally with the first side part, and at least a second one of the at least two bearing surfaces is arranged at or formed integrally with the second side part, such that the at least one first bearing surface and the at least one second bearing surface face each other, wherein the track module is configured such that the at least one first bearing surface matches with at least a first wheel of the carrier module, and that the at least one second bearing surface matches with at least a second wheel of the carrier module.

14. The track module (502) of any one of the preceding claims, being configured as one of the following track module types: a curve module, a switch module.

15. A linear motor conveying system (100), comprising one or more track modules (502) of any one of the preceding claims, and one or more carrier modules (150, 350) to be guided in the one or more track modules,
wherein the one or each of the more carriers is received or receivable in the one or each of the more track modules.
